(19)

**Europäisches Patentamt**

**European Patent Office**

**Office européen des brevets**

(11) **EP 4 629 494 A2**

(12) **EUROPEAN PATENT APPLICATION**

(43) Date of publication:
08.10.2025 Bulletin 2025/41

(21) Application number: 25191733.2

(22) Date of filing: 25.07.2025

(51) International Patent Classification (IPC):
$H02M\ 1/00^{(2006.01)}$ $\quad$ $H02M\ 3/00^{(2006.01)}$
$H02M\ 3/28^{(2006.01)}$ $\quad$ $H02M\ 3/335^{(2006.01)}$

(52) Cooperative Patent Classification (CPC):
H02M 3/01; H02M 1/0012; H02M 3/285;
H02M 3/33569

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(71) Applicants:
• NXP B.V.
5656 AG Eindhoven (NL)
• The Governing Council of the University of
Toronto
Toronto, Ontario M5G 0C6 (CA)

(72) Inventors:
• COBANI, Orest
5656 AG Eindhoven (NL)

• TRESCASES, Olivier
5656 AG Eindhoven (NL)
• BERTOLINI, Luca
5656 AG Eindhoven (NL)
• VAN DEN BERG, Arjan
5656 AG Eindhoven (NL)
• HALBERSTADT, Hans
5656 AG Eindhoven (NL)
• LAMMERS, Thieu
5656 AG Eindhoven (NL)

(74) Representative: Hardingham, Christopher Mark
NXP Semiconductors
Intellectual Property Group
The Cattle Barn
Upper Ashfield Farm, Hoe Lane
Romsey, Hampshire S051 9NJ (GB)

(54) **CONTROL OF A MULTI_PHASE RESONANT CONVERTER**

(57)     Methods and controllers are disclosed for controlling a multi-phase DC-DC resonant converter providing a converter average output current. The method comprises: controlling a nominal average phase output current of each phase using a respective inner control loop, by adjusting a respective control parameter; and controlling the phases to balance an actual phase average output current of each of the phases, wherein the converter output current is equal to a sum of the actual phase average output currents, by: operating an optimization algorithm to balance the actual average phase current between the phases by minimizing a cost function, by adjusting one or more of the respective control parameters; and operating a transform block by, in response to adjusting one or more of the control parameters, by adjusting one or more of the control parameters to maintain a same converter average output current.

FIG. 1

EP 4 629 494 A2

## Description

FIELD OF THE DISCLOSURE

This present disclosure relates to multiphase resonant converters, and control systems and methods therefor.

BACKGROUND

There is an increasing need for compact and energy-efficient power converters in fields such as electric vehicles and industrial application. Particularly for such relatively high-power applications, requiring perhaps hundreds of watts or kilowatts of power to be converted from one voltage level to another voltage, resonant converters, and in particular multiphase resonant converters are increasingly attractive. Multiphase resonant converters may be either "coupled" or "decoupled". In this context, coupled may refer to topologies in which the primary and secondary windings of the phase transformers are interconnected in a star configuration. In contrast, decoupled systems utilize fully independent single-phase transformers that are not electrically or magnetically connected to each other.

For both coupled and decoupled multiphase resonant converters, balancing between the phases or branches presents challenges. Whereas in an ideal situation, the components in each phase would be identical, in real applications, component tolerances result in differences between the phases which adds an additional level of complexity to the control thereof.

Typical control methods and systems require dedicated sensing components in order to take account of differences between components in each phase, or branch.

SUMMARY

According to a first aspect of the present disclosure, there is provided a method of controlling a multi-phase DC-DC resonant converter providing a converter average output current, the method comprising: controlling a nominal average phase output current of each phase using a respective inner control loop, by adjusting a respective control parameter; and controlling the phases to balance an actual phase average output current of each of the phases, wherein the converter output current is equal to a sum of the actual phase average output currents, by: operating an optimization algorithm to balance an actual average phase current between the phases by minimizing a cost function, by adjusting, or re-adjusting or further adjusting, one or more of the respective control parameters; and operating a transform block by, in response to adjusting one or more of the control parameters, by adjusting, or re-adjusting or further adjusting, one or more of the control parameters to maintain a same converter average output current. By implementing an optimization algorithm, in combination with an inner control loop, the method may avoid the need for additional or specific sensing circuitry, whilst enabling robust and or efficient balancing. In one or more embodiments, the cost function is a peak value of an output current ripple. The peak value of an output current ripple may be particularly straightforward and simple to evaluate. The converter average output current may typically be the average measured over a complete converter cycle; however, the disclosure is not limited thereto, and any other appropriate or suitable time time-base - such as a half-cycle, or 2 cycles - may be used instead of a single cycle.

In one or more other embodiments, the cost function is a function of an average estimated peak resonant current of each of the phases. Since a difference in the peak current value of the phases may be directly representative of an imbalance between the phases, this may provide fast convergence to an optimum operating point. In one or more such embodiments the cost function is the sum of the square of the differences between average estimated peak resonant current of the phases. The differences between logically or numbering-conventionally "neighboring" phases may be estimated - for example in a four-phase system, the differences between phases 1 and 2, 2 and 3, 3 and 4, and 4 and 1, in a symmetrical or cyclic fashion; conversely, in other embodiments, the differences between all phases may be estimated for example, in the four-phase system mentioned above, the differences between phases 1 and 2, 1 and 3, 1 and 4, 2 and 3, 2 and 4, and 3 and 4 may all be estimated in any permutation. In yet other embodiments, any other cost function which captures all the phase differences may be used - for example, an asymmetric set of differences, such as - for a three phase system - the square of difference between phases 1 and 2 plus the square of difference between phases 2 and 3, since, as that function tends to zero, the difference between the 1st and 3rd phases' average estimated peak current resonances must also tend towards zero. In general, the former (that is to say cyclic, or symmetric, squared differences) may be preferred since that typically results in faster convergence, and may require fewer calculations and less complexity; however, the present disclosure is not limited thereto.

In one or more embodiments the optimization algorithm is implemented as a finite state machine, FSM. In one or more embodiments, the optimization algorithm is a gradient descent method. Along with four other first-order methods, gradient descent method is straightforward in calculation, which may result in efficient control.

In one or more such embodiments, the optimization algorithm comprises determining a respective change in the cost function resulting from a step-wise change in each of the control parameters, and then updating the control parameters by adjusting each parameter in proportion to the respective change.

The control parameter may be a hysteretic window width. In one or more such embodiments, the inner control loop comprises hysteretic control, based on a hysteric window width of a voltage across a resonant capacitor. In one or more embodiments, the multi-phase DC-DC resonant converter is a coupled LLC converter. The coupled LLC converter may be a three-phase converter.

According to a second aspect of the present disclosure, there is provided a controller for controlling a multi-phase DC-DC resonant converter which provides a converter average output current, and comprising: a respective inner control loop block for each phase, configuring to: control a nominal average phase output current the phase, by adjusting a respective control parameter; and a balance controller configured to: control the phases to balance an actual phase average output current of each of the phases, wherein the converter output current is equal to a sum of the actual phase average output currents, the balance controller comprising: an optimization algorithm unit configured to balance an actual average phase current between the phases by minimizing a cost function, by adjusting one or more of the respective control parameters; and a transform block configured to, in response to adjusting one or more of the control parameters, adjust one or more of the control parameters to maintain a same converter average output current. In one or more embodiments, the cost function is a peak value of an output current ripple. In one or more other embodiments, the cost function is a function of an average estimated peak resonant current of each of the phases. In one or more such embodiments, the cost function is the sum of the square of the differences between average estimated peak resonant current of the phases.

In one or more embodiments, the optimization algorithm unit comprises a finite state machine, FSM.

In one or more embodiments, the optimization algorithm unit is configured to implement a gradient descent method. In one or more such embodiments, the optimization algorithm comprises determining a respective change in the cost function resulting from a step-wise change in each of the control parameters, and then updating the control parameters by adjusting each parameter in proportion to the respective change.

In one or more embodiments, the control parameter is a hysteretic window width. In one or more such embodiments, the inner control loop block comprises a hysteretic controller, based on a hysteric window width of a voltage across a resonant capacitor.

In one or more embodiments, the controller may be configured to control a coupled LLC converter. The coupled LLC converter may be a three-phase converter.

BRIEF DESCRIPTION OF THE DRAWINGS

Reference will now be made to the accompanying drawings, wherein:

FIG. 1 illustrates a control system for a multiphase resonant converter according to one or more embodiments of the present disclosure;

FIG. 2 illustrates a simulation using an example optimization algorithm, in this case using a gradient descent optimization;

FIG. 3 shows, schematically, a three-phase LLC coupled resonant converter;

FIG. 4 illustrates, schematically, trigger signal generation for hysteretic control of a phase of a resonant converter such as that shown in FIG. 3;

FIG. 5 illustrates the relationship between phase peak current and the gradient of the signal between upper and lower threshold levels;

FIG. 6, shows a flow diagram 600 of a gradient descent optimization algorithm according to one or more embodiments of the present disclosure;

FIG. 7 shows a finite state machine corresponding to the method of FIG. 6;

FIG. 8 shows a simulation for an optimization algorithm for a three-phase resonant converter under hysteretic control;

FIG. 9 illustrates the impact of imbalance between the phases on the output ripple; and

FIG. 10 illustrates the use of threshold level comparators to estimate the peak current from each phase.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION

The subject disclosure describes methods to control a multiphase resonant converter which can balance the current, or power, provided by each of the phases and, among other things, take account of differences between the components, in particular the size of the resonant tank, in each of the phases of the converter. Such differences may result from manufacturing tolerances between components. Moreover, one or more of the methods disclosed herein may not require complex dedicated phase-by-phase measurement circuitry, such as is required by some balancing methods.

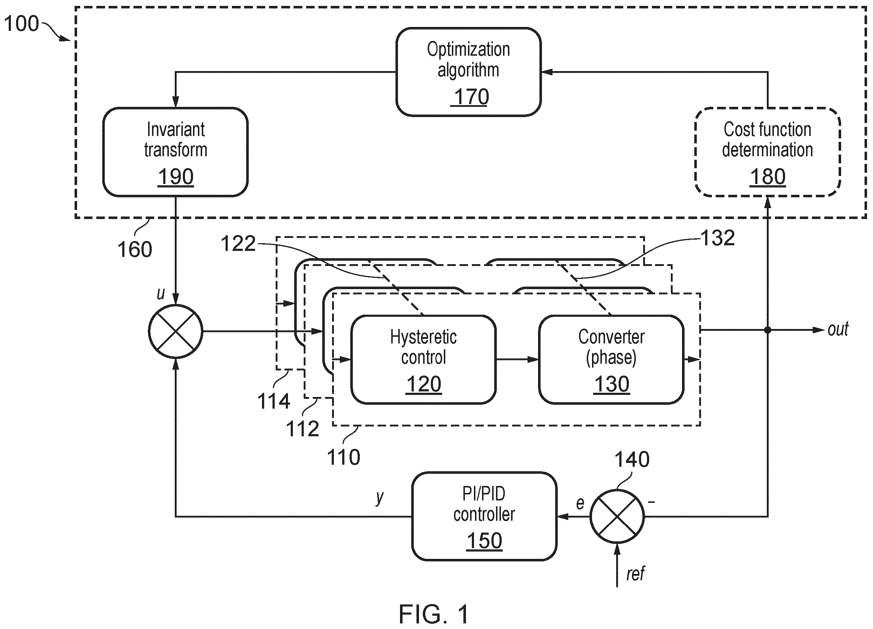

In order to facilitate a general understanding of the present disclosure, reference is made to FIG. 1, which illustrates, in conceptual terms, a control system 100 for a multiphase resonant converter according to one or more embodiments of the present disclosure. The figure shows an inner control 110, which consists of hysteretic controller 120 of the phases of the resonant converter. Since the present disclosure is relevant to both coupled and decoupled multiphase converters, in FIG. 1 the phases 130 and the hysteretic control 120 are shown separately for inner control 110, 112, 114 of each of the phases, which may be coupled as illustrated by links 122 and 132 for the controllers 120 and phases 130 respectively. It will be appreciated that irrespective of whether the converter is coupled or decoupled, the requirement to provide an output at a single voltage places a constraint on each of the phases - irrespective of the output current of each phase, it must be provided at a common voltage. Alternatively, the resonant converter could be considered as a single unit in which case 130 refers to the converter as a whole, rather than a single branch or phase.

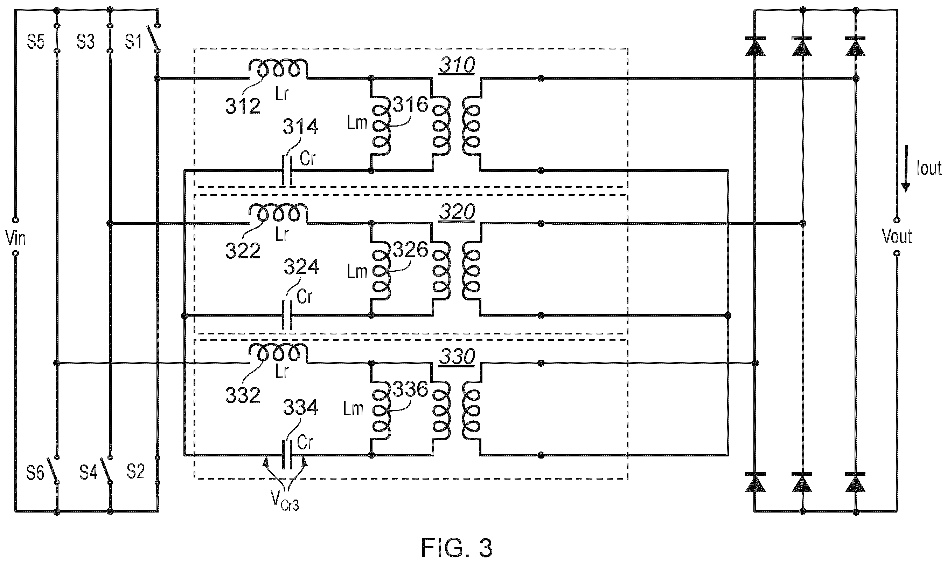

The figure also illustrates a control loop including determining the difference (140) between the output (or a signal representative of the output, such as a scaled version of the output) and a reference (ref), which may be representative of a current or power, resulting in an error signal e which is provided to a controller 150 such as a PI or PID controller. This provides a control signal $y$ to the hysteretic controller or controllers 120, which control the timing of the switches (such as S1 to S6 in FIG. 3 below) for the phases. This loop may be considered to be an "inner loop".

This part of the control loop will be recognized by the skilled person as a conventional control system. However, in order to balance the current, or power, provided by each of the phases, control systems according to embodiments of the present disclosure include a further loop 160, which may be referred to as a balancing controller. The balancing controller modifies the control provided by the inner loop, and thus may, to some extent, be considered to be an "outer loop". The skilled person will appreciate that the "inner loop" provides fast, or cycle-by-cycle control and an outer loop reacts more slowly, in order to, over time and potentially over many cycles, provide balancing between the current or power output from each of the phases. However, it will also be appreciated, from the discussion that follows, that the balancing controller 160 may directly modify the control parameters used in the inner loop. Alternatively and without restriction, the inner loop may be referred to as a "main" control loop, and the outer loop as an "adaptive" loop.

As illustrated in FIG. 1, the balancing controller 160 may be described as having three elements. Again, as will become apparent from the discussion below, these elements may be partially overlapping, or otherwise grouped in a different combination from that shown within the controller 160.

The balancing controller is based on an optimization algorithm, 170 in an optimization algorithm block. The optimization algorithm operates iteratively, to reduce the imbalance between the converter phases, over many - typically hundreds or even thousands - of switching cycles of the converter. In order to do so, it is configured to change or adapt one or more control parameters in order to minimize a cost function. The cost function is chosen to represent a degree or level of imbalance between the converter phases; minimizing the cost function thus corresponds to minimizing the imbalance. Example cost functions will be provided and discussed in more detail hereinbelow.

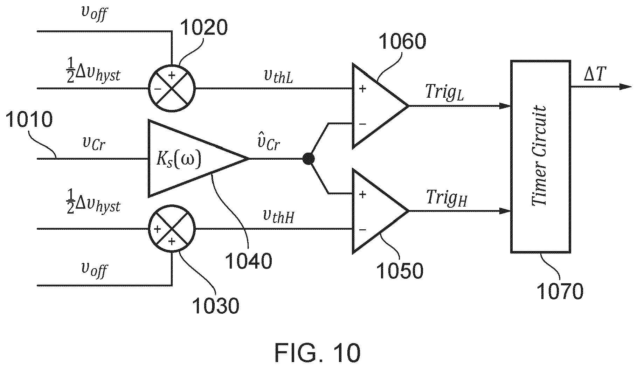

In order for the optimizing algorithm, 170, to operate, it is thus necessary to be able to determine, either by measurement or estimation, a magnitude of the cost function. This determination is shown at "cost function determination" 180 in FIG. 1. One example of a cost function, which will be discussed in more detail hereinbelow, is a peak value of the ripple on the output current. The skilled person will appreciate that no separate sensing circuitry is required in order to determine this cost function, since the output current is required to be known, for proper preparation of the converter. Another example of a cost function, again which will be discussed in more detail hereinbelow, is that of a sum of the square of the differences between the peak current of each phase. Whereas the peak current of each phase could be measured, in general, this may require additional circuitry; it may be preferable to use an estimation of each of the peak current. Again as will be discussed in more detail hereinbelow, it is possible to provide an estimation of the peak current, using only voltage comparators, which may already be required for proper operation of the hysteretic control of the converter phases. This will be discussed in more detail hereinbelow with reference to FIG. 10.

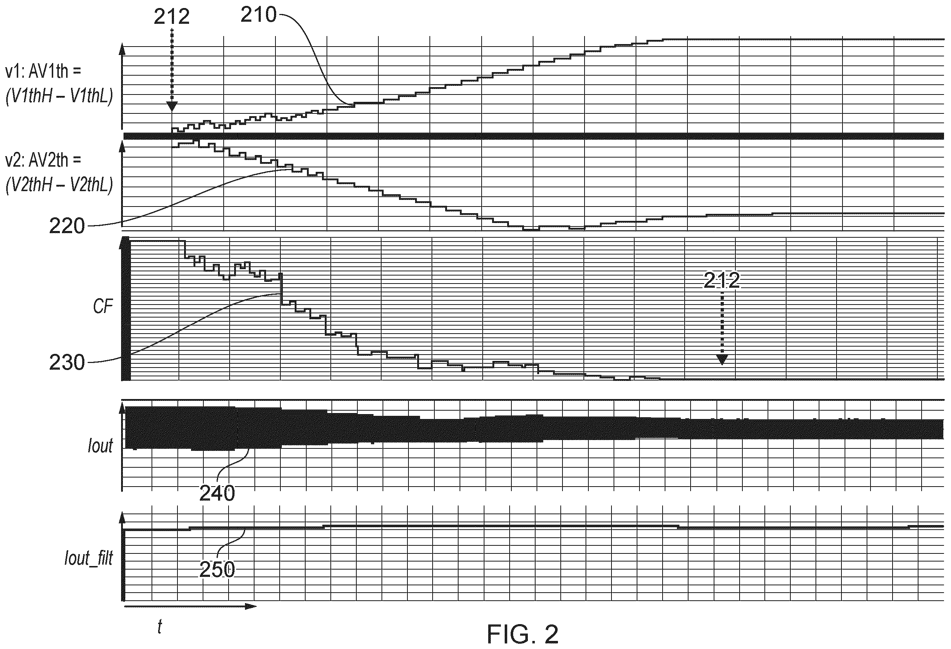

Turning for the moment to FIG. 2, this illustrates a simulation using an example optimization algorithm, in this case using a gradient descent optimization. The figure shows, starting from the top and in each case plotted against time t, at 210 the abstract variable v1 - which in this example corresponds to the threshold window size (that is to say the difference ΔV1th between the high and low window threshold values V1thH and V1thL), measured across the resonant capacitor of a first phase of a three-phase resonant converter; at 220, the abstract variable v2 - which in this example corresponds to the threshold window size (that is to say the difference ΔV2th between the high and low window threshold values V2thH and V2thL), measured across the resonant capacitor of a second phase of the three-phase resonant converter; at 230, evolution over time of the value of a cost function CF; at 240, the output current Iout, and at 250 the filtered output current Iout_filt. (Not shown is the voltage v3 across the resonant capacitor of the third phase of the resonant converter, this value is controlled by the invariant transform, which were discussed below). At the moment indicated by 212, the gradient descent algorithm is started: the cost function CF is evaluated periodically; next, the effect on the cost function of a stepwise change in the value of each of the parameters (in this case, v1 and v2), [and V3] is separately determined, and then parameters are both updated in the system, each update corresponding to the impact that the stepwise change in that parameter has on the cost function. The cost function shows a general reduction (although it is not necessarily monotonically decreasing, since some of the combined updates may result in an increase in the cost function). As can be seen at 240, the ripple on the output current gradually reduces over time, indicating an effectiveness of the optimization algorithm. In this particular example, the optimization algorithm step size for the parameter updates is gradually reduced over time; this may help to avoid oscillations or "bouncing" of the cost function. The average output current, seen at 250, remains invariant during the optimization algorithm operation, as a result of an invariant transform, which will now be considered.

Returning to FIG. 1, a further part of the balancing controller 160 is an "invariant transform block" 190. A requirement of, or constraint on, the balancing controller is not to perturb, or change, the output of the converter. That is to say, whilst reducing imbalance between the phases, the average output of the converter over a cycle - in other words, the sum of the average output of the phases over a cycle - should be kept constant. Effectively, as some parameters are changed in the updating step, other (or the same) parameters are adjusted according to the constraint - which in this case is to ensure that the total output current or power remains invariant. This adjustment is implemented through the invariant transform block 190, again as will be discussed in more detail for specific implementations hereinbelow.

From the general discussion above, it will be apparent to the skilled person that methods according to the present disclosure need not be dependent on the specific control mechanism used. Thus, the balancing controller may be used with hysteretic control in which upper and lower thresholds or limits of a current or voltage - typically a voltage across the resonant capacitor - in each phase are used to control the converter; it may be also used with frequency control, in which the switching frequency is used to control the converter, although in this case, there may be further implementation complexities - for example, particularly in a coupled- converter, the phase operating frequency is typically constrained by the coupling. In fact, the skilled person will be aware that there is an equivalence between hysteretic control involving the hysteretic window width and an offset from a midpoint voltage, and frequency control involving frequency and duty cycle adaptations. Nonetheless, as will become more apparent hereinbelow, hysteretic control is generally preferred for multiphase resonant converters, particularly for LLC, and bidirectional CLLC converters, irrespective of whether the phases are coupled or decoupled.

In order to provide a fuller understanding of the present disclosure, different embodiments will now be described. However, it will be appreciated from the above discussion that the general principles and concepts may be implemented in a wide variety of multiphase resonant converters and various optimization algorithms and cost functions may be used.

One or more embodiments of the present disclosure may be used to control a three-phase LLC resonant converter such as that shown in simplified form in FIG. 3. As can be seen in the figure, the resonant converter comprises three phases, or branches, 310, 320, 330. Each phase comprises an LLC resonant tank consisting of inductors Lr and Lm and resistor Cr. That is to say, the first phase 310 includes a resonant tank having resonant inductor Lr 312, resonant capacitor Cr 314, and magnetizing inductance Lm 316; the second phase 320 includes a resonant tank, having resonant inductor Lr 322, resonant capacitor Cr 324, and magnetizing inductance Lm 326; and the third phase 330 includes a resonant tank, including resonant inductor Lr 332, resonant capacitor Cr 334, and magnetizing inductance Lm 336. The phases are each driven by a pair of switches S1 and S2, S3 and S4, and S5 and S6, respectively. The switches are operated in a complimentary fashion, or antiphase, so at any time one and one only of S1 or S2 is closed. At the moment shown in the figure, the resonant tank in the first phase, 310 is being discharged, since S1 is open and S2 is closed, whereas the resonant tanks in the second and third phases 320 and 330 are being charged, since S3 and S5 are closed and S4, and S6 are open. Thus, the voltage across the first resonant capacitance 314 is decreasing, and the voltage across the second and third resonant capacitances 324 and 334 are increasing.

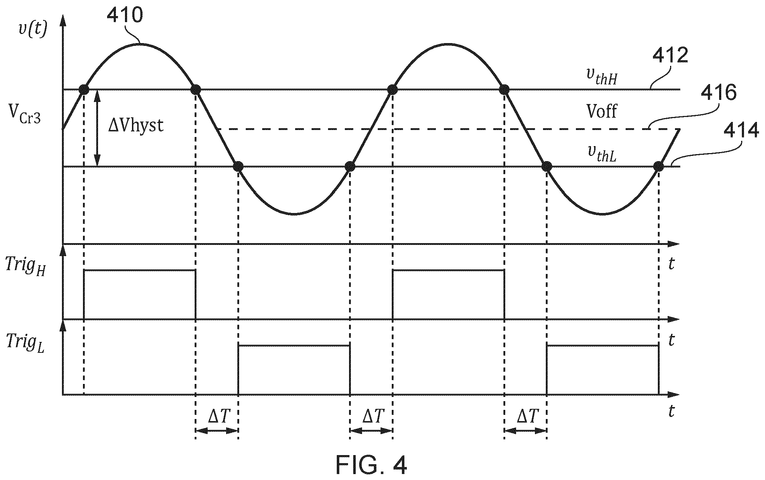

Trigger signal generation for hysteretic control of one of the phases is shown schematically in FIG. 4. The voltage across the resonant capacitor is shown at 410, which varies cyclically and approximately sinusoidally. Upper threshold voltage (VthH) 412 and lower threshold voltage (VthL) 414, are also shown in the top half of the figure. The voltage level 416 midway between the upper and lower thresholds 412 and 414 may be labelled as the hysteretic window offset for hysteretic control, and the separation between the thresholds may be labelled as the window width ∆Vhyst. Instead of measuring the actual voltage across the resonant capacitor, VCr, a pair of comparators (not shown in FIG. 3, are generally used to implement the hysteretic control, by comparing the voltage signal to the high and low threshold levels 412 and 414 defined by the controller, and trigger the switches (such as S1 and S2) to switch, when the capacitor voltage crosses the relevance threshold. Changing the values of VthH and VthL, in particular to change the hysteretic window width, results in a change of the output power delivered by the phase. It will be recognized that the hysteretic window offset is generally kept constant and - at least in a coupled system - at zero, in order to avoid building up a DC bias in the system. Thus, the changes in VthH and VthL are typically made symmetrically around the midpoint.

In order to balance the output current from each phase, it is desirable, in some embodiments, to be able to determine the peak current of each phase. Whereas this may be done by including current sensing, according to embodiments of the present disclosure, the currents may be estimated using the comparators just mentioned. In particular, the slope of the capacitor voltage signal is proportional to the average value of the resonant current over the corresponding time interval.

In order to implement hysteretic control, the comparator outputs generate a first signal "Trig_H = 1" when the capacitor voltage exceeds the high threshold voltage (VthH), and a second signal "Trig_L = 1" when the voltage falls below the low threshold voltage (VthL). The signals are sent to an SR latch, and used to control the pair of input switches (such as S1 and S2).

In order to provide an estimate of the current for the balancing controller, the time interval between the falling edge of Trig_H and the rising edge of Trig_L is measured using a timer circuit. Since the threshold voltages VthH and VthL are predefined by the controller, the average resonant current, or a value proportional to it, can be estimated using the following expression:

$$\text{I\_avg} = Cr * (VthH - VthL) / \Delta T; \qquad (1)$$

where Cr is the resonant capacitor value, and $\Delta T$ is the measured time interval.

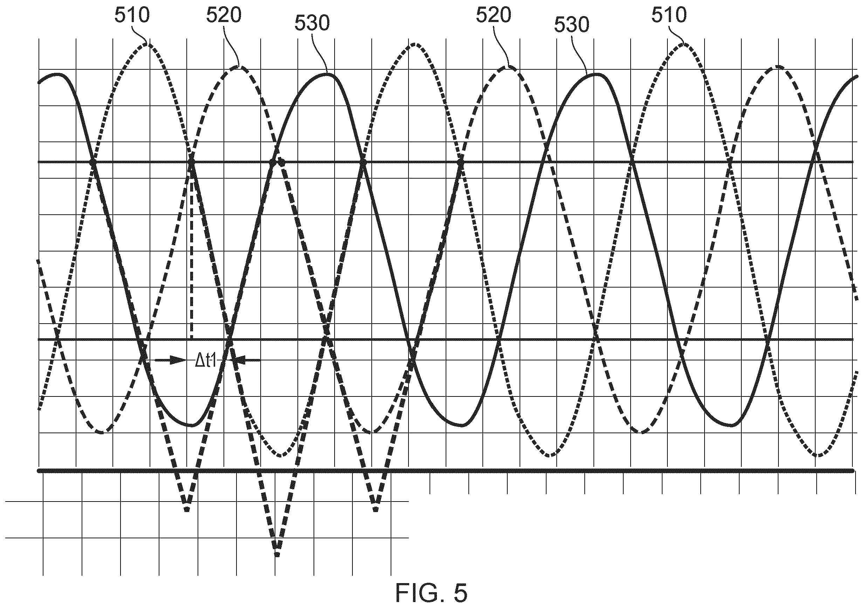

This procedure can be applied to each resonant capacitor in the multi-phase system, enabling the estimation of the average peak current in each phase. This is illustrated in FIG. 5, which shows the resonant capacitor voltages 510, 520 and 530 for each of the phases over several phases. In this example, due to imbalance in the system, the voltage excursions of the voltage 510 across the first phase resonant capacitor are larger than those for the second and third phase resonant capacitor voltages 520 and 530. (It will be appreciated that larger excursion of voltage across the capacitor correspond to larger excursion of current through the magnetizing capacitor.) The gradient of the voltage between the thresholds for the first phase is steeper than that for the other phases, and the time $\Delta t1$ between the comparators triggering at VthH and VthL is shorter. Thus the respective gradients, corresponding to $1/\Delta t1$, (and $1/\Delta t2$ and $1/\Delta t3$ not shown in FIG. 5) may be used as an indication of the peak phase currents. It can be shown that the current flowing during the time period in which the voltage changes from VthH to CVthL (or from VthL to VthH), that is to say over the time interval $\Delta t1$, is not, in general, exactly constant, and the maximum is not necessary at the mid-point of the time interval, so the term "peak current" as used here may be consider as the average over the interval, and thus may also be described as the "average peak current", rather than an instantaneous maximum which occurs at some point during this time interval. Furthermore, it will be appreciated that the optimization algorithm only requires a comparison of the currents rather than their absolute value. So, unless the phases' capacitances having different value (since they are part of the sensing scheme), it is only the relative values of $\Delta t1$, $\Delta t2$ and $\Delta t3$ which are required in order to create a suitable cost function to implement an optimization algorithm according to the present disclosure.

Summarizing the discussion around FIG. 4 and FIG. 5: whereas the individual phase hysteretic control may be implemented by the threshold level comparators, together with an SR latch circuit, the relative currents may be estimated using the threshold level comparators, together with a timer circuit.

In order to act as a cost function (block 180 in FIG 1) for the optimization algorithm, a function must have a minimum at the desired operating point - that is to say when the imbalance between the phases is minimized, which in this case corresponds to the peak phase currents (or more accurately, the average peak phase currents, as discussed above) being as nearly equal as possible. The estimated peak current Ipk1, Ipk2 and Ipk3, as just described may be used to construct a suitable cost function J for this purpose. A particularly convenient - though nonlimiting - example is the sum of the squares of the differences of neighboring phases. That is to say, for a three-phase example structure as illustrated in figure 3, a cost function **J3** may be defined as:

$$\mathbf{J3} = (Ipk2\text{-}Ipk1)^2 + (Ipk3\text{-}Ipk2)^2 + (Ipk1\text{-}Ipk3)^2. \qquad (2)$$

Of course, this can be generalized for a four, or more, phase system, having N phases:

$$\mathbf{J} = \sum_1^{N-1}(Ipk_{i+1} - Ipk_i)^2 + (Ipk_1 - Ipk_N) \quad . \qquad (3)$$

It can be readily shown that this function is convex (that is to say it has a minimum, which may typically be at the desired optimization when each of the differences is at or close to zero), and then the peak currents are equal.

A particularly convenient form of the optimization algorithm, as already mentioned, a is gradient descent algorithm. This will now be described in more detail, with reference to a three-phase resonant converter using hysteretic control. The method is based on a numerical estimation which is based on the mathematical gradient or del operator V.

Let **u** = (u1, u2, u3) be the set of control variables, for example the hysteretic window width of each of the phases.

Because of the constraint that the output power is to be kept constant, that is:

$$\text{power} = F(u1,u2,u3) = \text{constant}, \tag{4}$$

the dimensionality can be reduced from three to two (by an invariant transform):

$$\mathbf{u}(u1, u2, u3) :\rightarrow \mathbf{v}(v1,v2). \tag{5}$$

Then the gradient descent algorithm operates such that:

$$\mathbf{v}_{new} = \mathbf{v}_{old} - \alpha.\nabla_{\mathbf{v}} J(\mathbf{v}) \tag{6}$$

where $\mathbf{J}$ is the cost function (which can be measured, or estimated as just described), and $\alpha$ is the step-size. $\nabla_v \mathbf{J(v)}$ is unknown, and cannot be directly measured. However, it can be estimated using a partial derivative approach:

$$\frac{\partial}{\partial v_i} J(v) \cong \frac{J(v_i+\epsilon)-J(v_i)}{\epsilon} \quad . \tag{7}$$

In other words, the gradient of the cost function, denoted by the del operator ($\nabla$J), represents the rate of change of the cost function J with respect to each direction in the (reduced-by-one) input parameter space. In this case, each direction corresponds to a specific phase's hysteretic band. The estimated phase currents obtained using the sensing scheme mentioned above, and described below with reference to FIG. 10, serve as the inputs to the cost function. For each parameter (i.e., each phase's hysteretic band), a small perturbation ($\epsilon$) is applied. The change in the cost function ($\Delta$J) is then measured as: ($\mathbf{J}_{new}$ - $\mathbf{J}_{old}$) / $\epsilon$. This yields a partial derivative that reflects how sensitive the cost function is to changes in that direction. After computing partial derivatives for all parameters (in this case, two), a gradient vector $\nabla$J is formed. The algorithm then updates the parameters using the relation:

$$\mathbf{v}_{new} = \mathbf{v}_{old} - \alpha * \nabla \mathbf{J} \tag{8}$$

where a is a tunable step size or convergence rate. For example, if increasing the hysteretic band of phase 1 by 10 results in a decrease in the cost function $\mathbf{J}$ by 5, the rate of change in that direction is -0.5. Since the goal is minimization, the parameter is updated by adding a positive value proportional to $\alpha$ * 0.5. This procedure is repeated continuously, in an iterative fashion, to drive the system toward a balanced state where all phase currents are approximately equal.

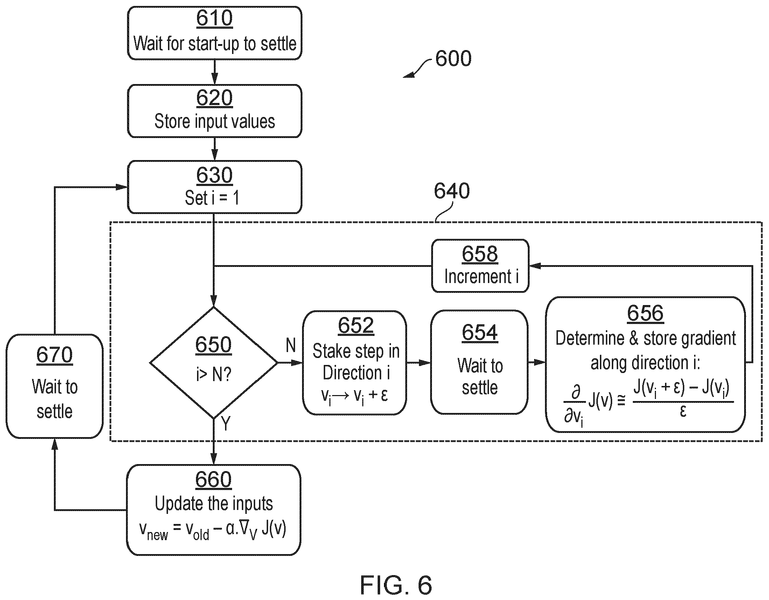

Turning now to FIG. 6, this shows a flow diagram 600 of a gradient descent optimization algorithm, as just described and according to one or more embodiments of the present disclosure. After the converter is switched on, the method may wait as shown at 610, for a period while the start-up configuration settles. The values of the input v are stored, as shown at 620. As described above, the input, v, is a vector, having length N. In the case of a three-phase resonant converter, N may be equal to 2. That is to say, it may correspond to the number of phases to be controlled, less one (since the control variable for the final phase is determined according to the invariance transform as discussed above). In a specific example, $v = (v_1, v_2)$, where $v_1$ and $v_2$ are the control variable (for example, the hysteretic window width) for phase 1 and phase 2 respectively.

The method then iteratively operates an optimization loop 640, which "looks-ahead", the effect of an increment of each of the control variables $v_i$. First, i is set to 1, set to 1, as shown at 630, and the loop is entered by checking, at 650, whether i is greater than N. The look-ahead involves increasing a single input variable $v_i$ (for the first time round the loop this is $v_1$), by a step $\epsilon$, as shown at step 652. After waiting for a time, shown at 654, for the system to settle, the effect on the cost function $\mathbf{J}$ is determined and stored, as shown at 656: $\frac{\partial}{\partial v_i} J(v) \cong \frac{J(v_i+\epsilon)-J(v_i)}{\epsilon}$. The value of i is incremented by one as shown at 658, and the loop restarted, for the next input variable. In the example shown, the method goes round the loop twice since N is equal to 2. Once the effect of changing each of the control inputs $v_i$ has been completed, the gradient

function $\nabla_v$ (**J**) may be estimated, as the combination of changes which has the greatest effect, that is to say, reduction in, the cost function **J**. As shown at 660, the inputs **v** are updated according to: $\mathbf{v}_{new} = \mathbf{v}_{old} - \alpha.\nabla_v J(\mathbf{v})$. The "reduced" control space **v** for the gradient descent is then increased back to the complete set of control parameters **u** for the system, by applying the invariant transform, such that

$$\Delta u1 = \Delta v1, \Delta u2 = \Delta v2, \text{ and } \Delta u3 = u3 - (\Delta u1 + \Delta u2) \quad (9).$$

The new inputs (in the dimension-reduced space) replace the original inputs (stored at 620, so after waiting for settling period. As shown at 670, the iterative process may start a new iteration by looking ahead at each of the control inputs $v_i$, in turn, again.

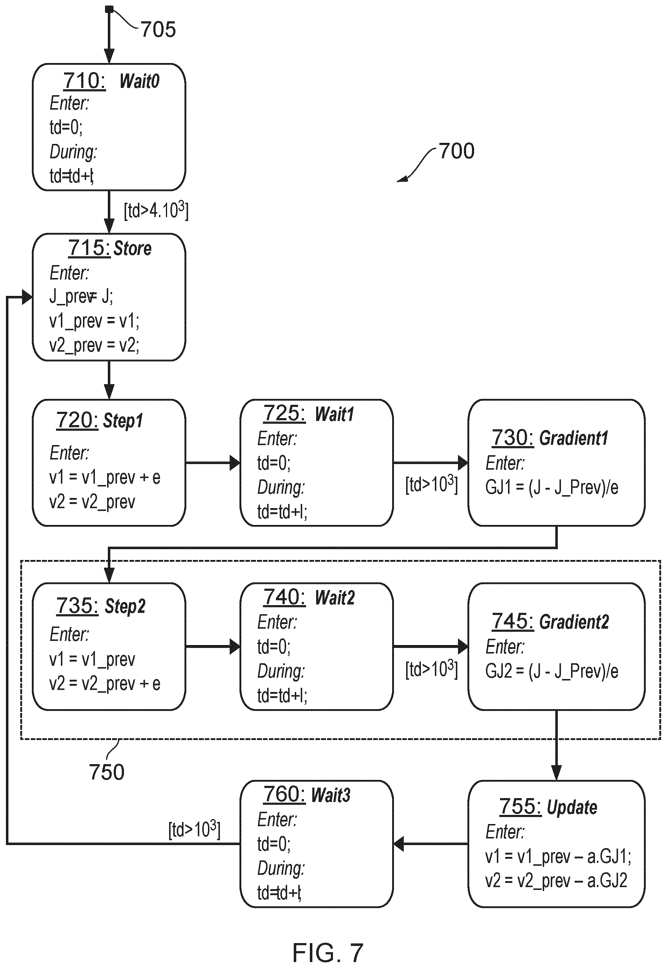

The optimization algorithm may be conveniently implemented as a finite state machine (FSM). Such a finite state machine 700 is illustrated in FIG. 7. After the system start at 705 - which typically corresponds to turning on the converter, the first state, 710 corresponds to a wait state ("Wait0"), in which a timer t, is incremented according to a clock. Once the timer reaches a predetermined level, which in this example is 4000, state machine moves to state 715 ("Store"), in which the current values of the cost function J, together with the input values are stored ("J_prev = J; v1_prev = v1; v2_prev = v2"). The state machine moves to moves to state 720 ("Step1 "), in which the first control input is increased by a step of size e (corresponding to ε in the method discussed above) ("v1 = v1_prev + e; v2 = v2_prev"). The state machine moves to a further wait state 725, in which the timer is reset and incremented to, in the example shown, 1000, after which the state machine moves to step 730 ("Gradient1") in which the impact on **J** of the step in v1, is evaluated ("GJ1 = (J - J_prev)/e"). The state machine then moves to evaluate the impact of an increase in the second control variable by the step e (whilst the other variables - in this case, which corresponds to the single variable v1 - are kept at their previous values vi_prev), in steps 735 (which increasing the value of v2, that is to say v1 = v1_prev; v2 = v2_prev + e), 740 (which is a further wait state, while the timer counts from 0 to, in the example shown, 1000) and 745 (which is a second "gradient" evaluation, this time determining the impact on J of the step in v2). In the example shown, in which there are just two input variables B1 and B2, the state machine moves to the next step 755, which is an update step. The skilled person will appreciate that, in the more general case where there are more input variables, the triplet 750 of states 735, 740, and 745 are repeated, in each case applying the same step e (or ε) to just one of the input variables. In state 755, ("update"), the input variables are updated, by applying a delta to each input variable which is proportional to the effect on the cost function of the step change of that input variable (v1 = v1_prev-a.GJ1; v2 = v2_prev - a.GJ2).

The scaling value a (which corresponds to α in the methods discussed above) is chosen in order to determine a speed of convergence towards an optimum value. The value of a (or alpha) is application-specific; if α small, the method may take a long time to reach the optimum (minimum) of the cost function; conversely, if a or α is large, the method may overshoot the minimum. In one or more embodiments, the value of a or α may be arranged to decrease over time, in a fashion, analogous to a PID controller in which the step is reduced as the system approaches the optimum. Moreover, the size of the "lookahead" step (e or ε) for each control input, may similarly be arranged to decrease over time, as the system approaches the optimum operating conditions.

Once the updating step is complete, the state machine moves to another wait state 760, while a counter increments from 0 to, again in this example, 1000, before returning to the "store" state 715 in which the new values of the input variables are stored.

Next, an example of an invariant transform function, corresponding to block 190 in FIG. 1, will be considered, that may be used according to one or more embodiments, in order to control a three-phase resonant converter such as that shown in FIG. 3. The implementation of the balancing controller requires at least one degree of freedom in the system to ensure invariance with respect to the output regulation loop. In other words, there must exist at least one control parameter that can be adjusted to balance the phase currents without affecting the regulation of either the output current or the output voltage.

For example, consider regulating the total output current defined as:

$$I\_out = I1 + I2 + I3 \quad (4)$$

Assume, for the moment, that I1 and I2 are equal, and I3 is different. If only I3 is adjustable (i.e., it is the only available degree of freedom), then modifying I3 to match I1 and I2 would lead to current balancing. However, because I1 and I2 remain fixed, any change in I3 directly affects I_out. To maintain a constant output current while adjusting I3, the following constraint must be satisfied:

$$\Delta I1 + \Delta I2 + \Delta I3 = 0 \qquad (5)$$

In a particular case in which I1 is constrained to equal I2, then this simplifies to:

$$\Delta I1 = \Delta I2 = -\Delta I3 / 2 \qquad (6)$$

If all three phase currents are allowed to change freely (i.e., it is no longer assumed that I1 = I2), the constraint can be distributed across the phases in various ways. The enforcement of this constraint is referred to as the output current invariance transform, and it is used to decouple the current balancing control loop from the output current regulation loop.

In a decoupled multi-phase resonant topology, the degrees of freedom for each phase are independent, allowing changes in one phase current without influencing others. This enables straightforward implementation of the invariance transformation.

In contrast, in a coupled three-phase CLLC converter, adjusting the control input of one phase inherently influences the others due to magnetic coupling. In such systems, the invariance transformation must account for interdependence among the phases. When hysteretic control is used for the coupled three-phase system, the transformation needed to enforce output current invariance can be derived analytically.

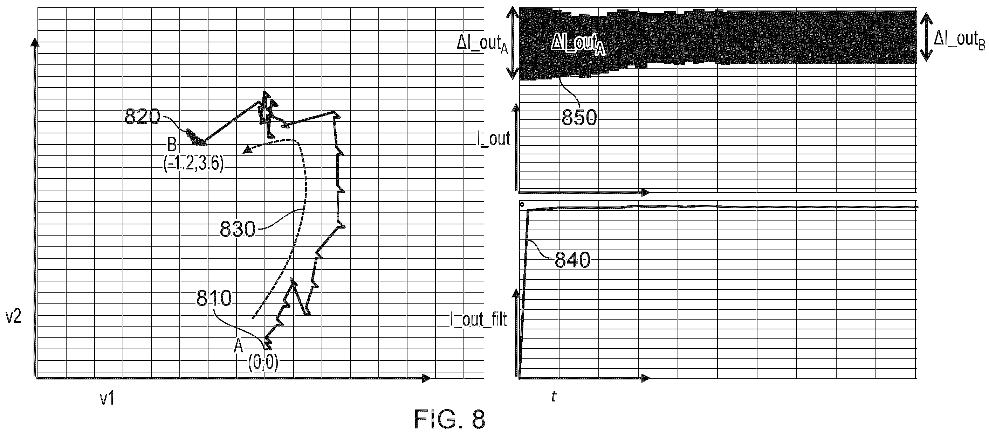

FIG. 8, shows a simulation for an optimization algorithm for a three-phase resonant converter under hysteretic control. The left-hand side of the figure shows two dimensions of the control space, that is to say, the window width control variable vi, for the first phase, $v_1$, is plotted on the x-axis, and that, $v_2$, for the second phase is plotted in the y-axis. The evolution 830 of the control variables over time is shown by the progression from A to B, where the starting (nominal) operating point A 810 corresponds to (0,0), and the final optimum operating point B 820 is at, in this case (-1.2, 3.6). The window width control variable for the third phase, that is to say v3 is not shown in the figure, but evolves over time, according to the invariance transform. On the right-hand side of the figure is shown, on the upper half the figure, the instantaneous output current $\Delta 940I\_out$ 850 from the converter (the time-axis is too slow to distinguish the instantaneous value - the width of the trace reflects the ripple), plotted against time on the x-axis; on the lower half of the figure is shown, the filtered or average output current (I_out_filt). The effect of the invariance transform can be seen from the fact that the filtered output current (I_out_filt) remains essentially constant as shown at 840, whilst the ripple on the output current, ($\Delta I\_out$), shown at 850, significantly reduces over time from its initial value $\Delta I\_out_A$ to the final, stable, value $\Delta I\_out_B$, once the gradient descent optimization algorithm has determined the optimum operating point.

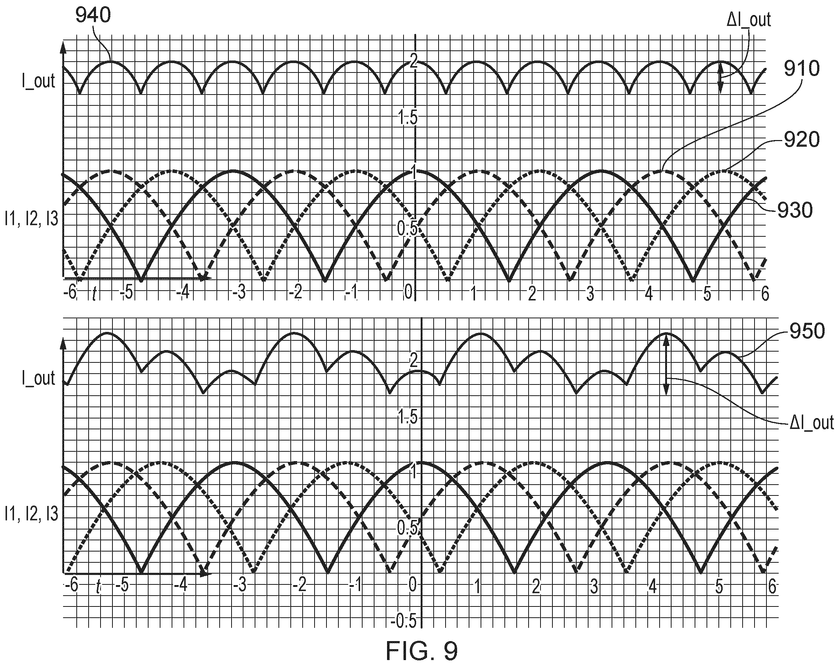

An alternative cost function, which may be used in one or more embodiments instead of one based on the measured or estimated individual phase currents, is the actual ripple on the converter output current. The impact of imbalance between the phases - in this case an imbalance between the timing of three phases in a three-phase converter - on the output ripple may be seen in FIG 9. The top half of the figure shows, at 910, 920 and 930, the individual phase currents I1, I2, and I3, for a balanced converter, along with the output current I_out at 940. The lower half of the figure shows, at 880, the output ripple for the same converter in which the three phases provide the same output current, but are not timed to have a 120° phase difference between each phase. As can be clearly seen from the ripple 950, timing imbalance results in an increase in the ripple $\Delta I\_out$. The skilled person will also readily understand that an imbalance in the magnitudes of the phase currents would also result in increase in the ripple of the output current, as would a combination of both amplitude mismatch and unequal phase separation. The magnitude of the output ripple, $\Delta I\_out$, may be used as a cost function for the optimization algorithm. Whereas it has been found by simulation that use of the difference between the individual currents directly to construct a cost function, may lead to fast convert in an entrance on the optimum operating point, use of the ripple on the output current may be particularly convenient, since no additional measurement circuitry need be required, according to embodiments.

The skilled person will be aware that, in the case of resonant converters in which the phases are coupled, either magnetically or electrically, imbalance between the phase currents (resulting for example from mismatch between the components in the resonant tanks) may result in timings between the phases.

Although, for definiteness, the above embodiments have been described using a gradient descent method as the optimization function, the present disclosure is not limited thereto. Modified gradient descent method, such as the mentor/nester of accelerated gradient (energy) or other first order methods may alternatively be used, such as adagrad; second-order method such as Newton's methods may also be used, although it would be appreciated that the computational complexity may increase for second (or even higher order) algorithms.

FIG. 10 illustrates the use of threshold level comparators to estimate the peak current from each phase. In the example, there are two adjustable parameters: $\Delta$vhyst, corresponding to the window width, and voff, corresponding to the window offset. The sum 1030 of $\Delta$vhyst and voff defines the upper threshold level vthH, and the difference 1020 voff- $\Delta$vhyst defines the lower threshold level vthL. Ks 1040, which typically may have a frequency dependence ($\omega$) because of sensing delays and offsets, represents the gain of the sensing circuitry (so typically Ks <1, The voltage 1010 (vCr) across the resonant capacitor, or to be more exact the sensed version (v̂Cr) thereof, is compared with vthH in a first comparator 1050 to provide a high trigger signal (TrigH), and with the THL in a second comparator 1060 to provide a low trigger signal (TrigL). As discussed above with regard to FIG. 4, the outputs TrigH and TrigL from these comparators are used, together with a SR latch, to provide hysteretic control of the converter phase. However, they can be reused as inputs to a timer circuit 1074000 (which times the separation between the signals (that is to say the gap when VCR is between vthL and vthH), yielding the time $\Delta t$. Thus, no additional sensing circuitry is required, and only a timer (which may be provided in the analogue or digital domain) is needed in order to provide the estimation of the peak currents of the phases, and in particular the differences between the peak currents of the phases.

The illustrations of embodiments described herein are intended to. Provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

**Claims**

1. A method of controlling a multi-phase DC-DC resonant converter providing a converter average output current, the method comprising:

   controlling a nominal average phase output current of each phase using a respective inner control loop, by adjusting a respective control parameter; and
   controlling the phases to balance an actual phase average output current of each of the phases, wherein the converter output current is equal to a sum of the actual phase average output currents, by:

   operating an optimization algorithm to balance the actual average phase current between the phases by minimizing a cost function, by adjusting one or more of the respective control parameters; and
   operating a transform block by, in response to adjusting one or more of the control parameters, by adjusting one or more of the control parameters to maintain a same converter average output current.

2. The method of claim 1, wherein the cost function is a peak value of an output current ripple.

3. The method of claim 1, wherein the cost function is a function of an average estimated peak resonant current of each of the phases.

4. The method of claim 3, wherein the cost function is the sum of the square of the differences between average estimated peak resonant current of the phases

5. The method of any preceding claim, wherein the optimization algorithm is implemented as a finite state machine, FSM.

6. The method of any preceding, wherein the optimization algorithm is a gradient descent method.

7. The method of claim 6, wherein the optimization algorithm comprises determining a respective change in the cost function resulting from a step-wise change in each of the control parameters, and then updating the control parameters by adjusting each parameter in proportion to the respective change.

8. The method of any preceding claim, wherein the control parameter is a hysteretic window width.

9. The method of claim 8, wherein the inner control loop comprises hysteretic control, based on a hysteric window width of a voltage across a resonant capacitor.

10. A controller for controlling a multi-phase DC-DC resonant converter which provides a converter average output current, and comprising:

> a respective inner control loop block for each phase, configuring to:
> control a nominal average phase output current the phase, by adjusting a respective control parameter; and
> a balance controller configured to: control the phases to balance an actual phase average output current of each of the phases, wherein the converter output current is equal to a sum of the actual phase average output currents, the balance controller comprising:
>
> > an optimization algorithm unit configured to balance an actual average phase current between the phases by minimizing a cost function, by adjusting one or more of the respective control parameters; and
> > a transform block configured to, in response to adjusting one or more of the control parameters, adjust one or more of the control parameters to maintain a same converter average output current.

11. The controller of claim 12, wherein the cost function is a function of an average estimated peak resonant current of each of the phases.

12. The controller of any of claims 12 to 15, wherein the optimization algorithm unit is configured to implement a gradient descent method.

13. The controller of any of claims 12 to 18, wherein the control parameter is a hysteretic window width, and the inner control loop block comprises a hysteretic controller, based on a hysteric window width of a voltage across a resonant capacitor.

14. A coupled LLC converter, comprising the controller of any of claims 10 to 13.

15. The coupled LLC converter of claim 14, wherein the coupled LLC converter is a three-phase converter.

FIG. 1

FIG. 2

FIG. 3

EP 4 629 494 A2

FIG. 4

EP 4 629 494 A2

FIG. 5

EP 4 629 494 A2

## 610
Wait for start-up to settle

## 620
Store input values

## 630
Set i = 1

640

## 658
Increment i

## 650
i > N?

N

## 652
Stake step in
Direction i
$v_i \rightarrow v_i + \varepsilon$

## 654
Wait to
settle

## 656
Determine & store gradient
along direction i:
$$\frac{\partial}{\partial v_i} J(v) \cong \frac{J(v_i + \varepsilon) - J(v_i)}{\varepsilon}$$

Y

## 670
Wait to
settle

## 660
Update the inputs
$v_{new} = v_{old} - \alpha . \nabla_V J(v)$

600

FIG. 6

**710: Wait0**
*Enter:*
td=0;
*During:*
td=td+t̪

[td>4.10³]

**715: Store**
*Enter:*
J_prev= J;
v1_prev = v1;
v2_prev = v2;

**720: Step1**
*Enter:*
v1 = v1_prev + e
v2 = v2_prev

**725: Wait1**
*Enter:*
td=0;
*During:*
td=td+t;

[td>10³]

**730: Gradient1**
*Enter:*
GJ1 = (J - J_Prev)/e

**735: Step2**
*Enter:*
v1 = v1_prev
v2 = v2_prev + e

**740: Wait2**
*Enter:*
td=0;
*During:*
td=td+t;

[td>10³]

**745: Gradient2**
*Enter:*
GJ2 = (J - J_Prev)/e

**760: Wait3**
*Enter:*
td=0;
*During:*
td=td+t̪

[td>10³]

**755: Update**
*Enter:*
v1 = v1_prev − a.GJ1;
v2 = v2_prev − a.GJ2

705

700

750

FIG. 7

FIG. 8

FIG. 9

EP 4 629 494 A2

FIG. 10